# EUROPÄISCHE PATENTSCHRIFT

(11) **EP 0 937 415 B1**
(45) Veröffentlichungstag und Bekanntmachung des Hinweises auf die Patenterteilung: **22.05.2002**
(21) Anmeldenummer: 99101986.0
(22) Anmeldetag: 01.02.1999
(51) Int. Cl.: A24C 5/345, A24C 5/32

(54) **Vorrichtung zum Entfernen von stabförmigen Artikeln der tabakverarbeitenden Industrie aus Aufnahmen eines umlaufenden Förderers**
Apparatus for removing rod-like articles from a seat of a rotary conveyor in the tobacco industry
Dispositif pour enlever des articles en forme de tige d'un logement d'un convoyeur rotatif dans l'industrie du tabac

(30) Priorität: 14.02.1998 DE 19806125
(43) Veröffentlichungstag der Anmeldung: 25.08.1999
(73) Patentinhaber: Hauni Maschinenbau AG, 21033 Hamburg (DE)
(72) Erfinder: Dombek, Manfred, 21521 Dassendorf (DE)

(56) Entgegenhaltungen:
- EP-A- 0 585 776
- FR-A- 2 084 052
- GB-A- 1 187 261
- GB-A- 1 565 206

## Beschreibung

Die Erfindung betrifft eine Vorrichtung zum Entfernen von stabförmigen Artikeln der tabakverarbeitenden Industrie aus Aufnahmen eines umlaufenden Förderers unter Einsatz von durch Druckluftimpulse auf die Artikel einwirkenden Steuermitteln nach dem Oberbegriff des Anspruchs 1, wie dies bereits aus GB-A-1 565 206 bekannt ist.

Unter stabförmigen Artikeln der tabakverarbeitenden Industrie werden verstanden Zigaretten, Zigarren und Zigarillos mit und ohne Filter sowie Filterstäbe. Insbesondere auch Artikelgruppen mit unterschiedlichen Komponenten, beispielsweise aus jeweils zwei Zigaretten mit dazwischenliegendem Doppelfilter.
In der Zigarettenindustrie müssen mitunter derartige Artikel oder deren Komponenten von ihrer Förderbahn entfernt bzw. auf eine andere Förderbahn überführt werden, entweder zwecks Aussonderung fehlerhafter Artikel oder zwecks Probenentnahme von zu prüfenden Artikeln.

Der Erfindung liegt die Aufgabe zugrunde, aus einer Reihe von mit hoher Fördergeschwindigkeit aufeinanderfolgend geförderten Artikeln gezielt einzelne Artikel zu entnehmen.

Diese Aufgabe wird erfindungsgemäß durch die kennzeichnen Merkmale des Anspruchs 1 gelöst.
Um von dem stationären Blasluftanschluß beliebige Abgabepunkte des Förderers erreichen bzw. ansteuern zu können, sind nach einem weiteren Vorschlag Blasdüsen und Steuerschlitz durch einen Blasluftkanal miteinander verbunden.

Um Artikel bzw. Artikelkomponenten auf der ganzen Breite des Trommelförderers zwecks Entfernung durch Blasluft beaufschlagen zu können, ist außerdem vorgesehen, daß der Düsenkörper als in einem stationären, die Blasluft- und Entlüftungsanschlüsse aufweisenden Steuerflansch gelagerte Welle ausgebildet ist.

Eine gezielte Aussonderung einzelner Komponenten einer Artikelgruppe ist gemäß einer Ausgestaltung dadurch möglich, daß jeweils Blasluft- und Entlüftungsanschlüsse bzw. Steuerschlitze, Blasluftkanäle und Blasdüsen für vordere und hintere Blasluftöffnungen des Förderers vorgesehen sind.
Eine zusätzliche Maßnahme zur Verbesserung der Entnahme wird gemäß einer Weiterbildung dadurch erreicht, daß den Steuerschlitzen jeweils zwei im Wechsel separat steuerbare stationäre Blasluftanschlüsse bzw. Entlüftungsanschlüsse zugeordnet sind.
Zur Realisierung des Synchronantriebs von Düsenkörper und Förderer ist zweckmäßigerweise der Düsenkörper durch eine vom Förderer abgeleitete Antriebsverbindung antreibbar, wobei gemäß einer speziellen Ausgestaltung die Antriebsverbindung einen von einer Antriebswelle des als Muldentrommel ausgebildeten Förderers antreibbaren Zahnriemen aufweist.
Um die Artikel in exakter queraxialer Ausrichtung aus den Mulden der abgebenden Trommel in die Mulden der übernehmenden Trommel zu überführen, ist außerdem vorgesehen, daß die Blasluftöffnungen zwischen linear beabstandeten Muldenabschnitten der Aufnahmemulden angeordnet sind.

Der mit der Erfindung erzielte Vorteil besteht darin, daß durch den verlängerten Bewegungsabschnitt des Steuerschlitzes so viel Zeit gewonnen wird, daß einerseits rechtzeitig bzw. vor der eigentlichen Entnahme ein Druck aufgebaut wird, welcher im Abgabebereich sofort und in voller Höhe wirksam wird, und daß diesem aufgebauten Druck andererseits anschließend ausreichend Zeit zum Abbau gegeben wird, so daß nachfolgende Artikel unbeeinflußt bleiben. Damit können ganz gezielt einzelne Artikel ausgesondert bzw. geordnet auf anschließende Fördermittel übergeben werden.

Die Erfindung wird nachfolgend anhand eines in der Zeichnung dargestellten Ausführungsbeispiels näher erläutert.

Hierbei zeigen:
- Figur 1: einen Teilquerschnitt durch einen Trommelförderer mit zugeordnetem Düsenkörper nach der Erfindung,
- Figur 2: den Trommelförderer und den Düsenkörper in einer Abgabestellung und
- Figur 3: einen Teillängsschnitt durch den Trommelförderer mit zugeordnetem Düsenkörper.

Ein Förderer in Form einer mit Aufnahmemulden 1 versehenen Muldentrommel 2 ist um eine Achse 3 umlaufend antreibbar.
Die hier abgebildete Muldentrommel 2 dient zum Transport von stabförmigen Artikeln in Form von Doppelfilterzigaretten 4, deren unterschiedliche Komponenten in Form von Tabakstöcken und Filterstopfen mit 6 und 7 bezeichnet sind und die im Filterbereich entlang einer mittigen Trennungslinie 8 in Einzelfilterzigaretten durchtrennt sind. Zum Halten der Doppelfilterzigaretten 4 sind die Aufnahmemulden 1 in mehrere linear beabstandete Muldenabschnitte 9, 11, 12 unterteilt, in die mit einer Saugkammer 13 verbundene Saugöffnungen 14 einmünden.
Darüber hinaus ist die Muldentrommel 2 von vorderen und hinteren Blasluftöffnungen 15 bz. 16 durchsetzt, welche am vorderen und hinteren Trommelende zwischen den Muldenabschnitten 9, 11 bzw. 11, 12 aus der Muldentrommel 2 austreten.

Innerhalb der Muldentrommel 2 ist in einem stationären Steuerflansch 17 und einem Halteflansch 18 ein rotativ antreibbarer, als langgestreckte Welle ausgebildeter Düsenkörper 19 gelagert, welcher durch ein vom Antriebsmittel in Form einer Antriebswelle 21 der Muldentrommel 2 abgeleitetes Antriebsmittel in Form eines Zahnriemens 22 synchron und in gleicher Drehrichtung (Pfeile 23) mit der Muldentrommel umlaufend antreibbar ist.
Der Düsenkörper 19 ist mit vorderen und hinteren radialen Blasdüsen 24 bzw. 25 versehen, die in einem Abgabebereich A der Muldentrommel 2 mit deren Blasluftöffnungen 15 bzw. 16 kommunizieren.
Die Blasdüsen 24, 25 sind jeweils über einen den Düsenkörper 19 längsaxial durchsetzenden Blasluftkanal 26 bzw. 27 mit einem in Umfangsrichtung des Düsenkörpers 19 verlaufenden Steuerschlitz 28 bzw. 29 verbunden. Die Steuerschlitze 28 und 29 mit den zugehörigen Blasluftkanälen 26 bzw. 27 sowie Blasdüsen 24 bzw. 25 sind jeweils um 90° versetzt vierfach im Düsenkörper 19 angeordnet.

Im Abgabebereich A kommunizieren die Steuerschlitze 28, 29 über ihre ganze Bogenglänge mit jeweils doppelt vorhandenen Blasluftanschlüssen 31 bzw. 32 des stationären Steuerflansches 17.
In einem - bezogen auf die Drehrichtung (Pfeil 23) des Düsenkörper 17 - stromabwärtigen Bereich kommunizieren die Steuerschlitze 28, 29 über ihre ganze Bogenlänge mit ebenfalls jeweils doppelt vorhandenen Entlüftungsanschlüssen 33 bzw. 34 des stationären Steuerflansches 17.
Die Muldentrommel 2 selbst wirkt im Abgabebereich A beispielsweise alternativ mit einem strichpunktiert angedeuteten Muldenband 36 bzw. einer strichpunktiert angedeuteten Muldentrommel 37 zusammen.

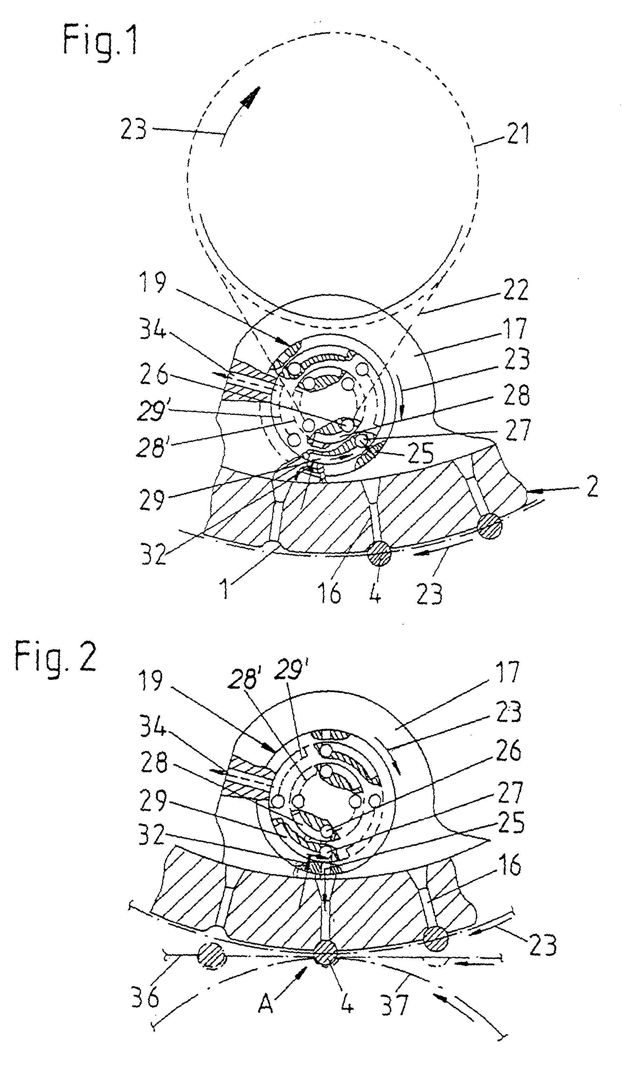

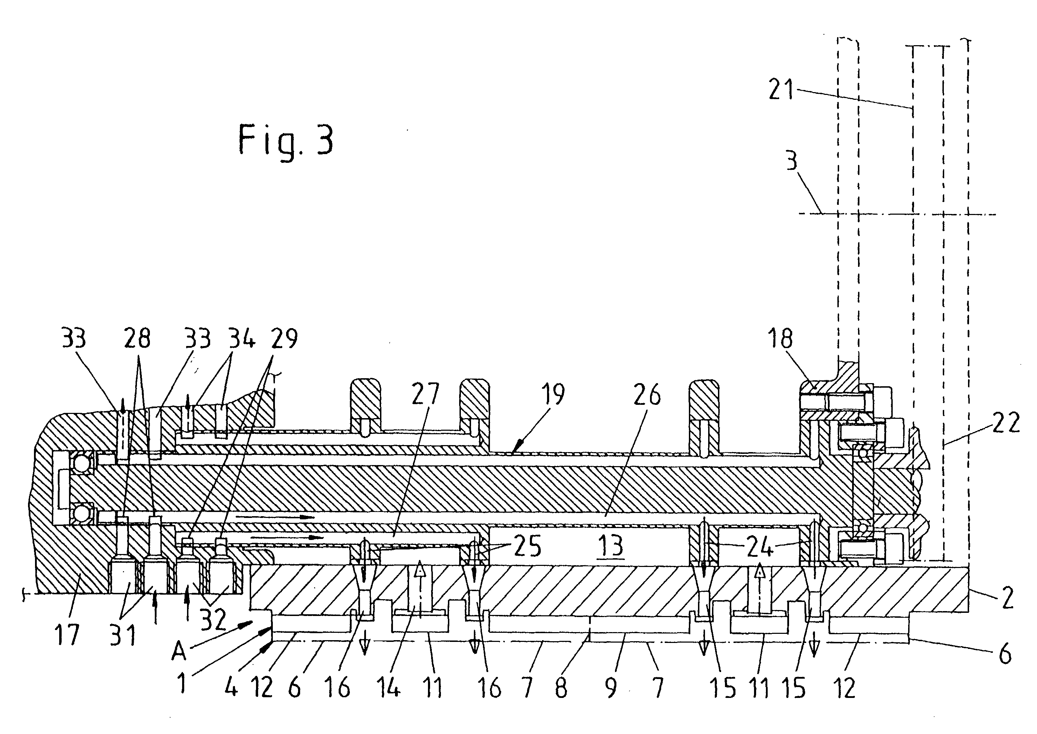

Die Wirkungsweise der Vorrichtung ist wie folgt:
Gemäß Figur 1 beginnen beim Umlauf des Düsenkörpers 19 ein innerer und ein äußerer Steuerschlitz 28 bzw. 29 jeweils einen der Blasluftanschlüsse 31 bzw. 32 zu überlaufen, so daß in den Steuerschlitzen sowie den anschließenden Blasluftkanälen 26 und 27 und den radial abzweigenden Blasdüsen 24 und 25 ein Druck aufgebaut wird.
Beim synchronen Umlaufen (Pfeile 23) von Düsenkörper 19 und Muldentrommel 2 überschneiden sich gemäß Figuren 2 und 3 im Abgabebereich A über einen bestimmten Drehwinkel von Düsenkörper und Muldentrommel deren Blasdüsen 24, 25 und Blasluftöffnungen 16, so daß durch den vorher aufgebauten Druck die Komponenten der Doppelfilterzigaretten 4 aus ihrer Aufnahmemulde 1 entfernt werden.
Beim weiteren Umlauf des Düsenkörpers 19 wird die Strömungsverbindung zwischen den Steuerschlitzen 28, 29 und den Blasluftanschlüssen 31 bzw. 32 unterbrochen. Anschließend erreichen und überlaufen die zuvor aktivierten Steuerschlitze 28, 29 die Entlüftungsanschlüsse 33 bzw. 34, so daß der in ihnen noch anstehende Restdruck abgebaut wird und nachfolgende, für einen Artikelabwurf nicht vorgesehene Blasluftöffnungen 16 der Muldentrommel 2 unbeaufschlagt bleiben.
Gemäß den Figuren 1 und 2 befinden sich demnach bei zwei in Drehrichtung (Pfeil 23) unmittelbar aufeinanderfolgend aktivierten Steuerschlitzen 28 und 29 bzw. 28' und 29' gemäß Figur 1 jeweils Steuerschlitze 28 und 29 am Anfang der Druckaufbauphase und Steuerschlitze 28' und 29' am Anfang der Entlüftungsphase bzw. gemäß Figur 2 jeweils die Steuerschlitze 28 und 29 am Ende der Druckaufbauphase bzw. in der Ausblasphase und die Steuerschlitze 28' und 29' am Ende der Entlüftungsphase.

## Patentansprüche

1. Vorrichtung zum Entfernen von stabförmigen Artikeln der tabakverarbeitenden Industrie aus Aufnahmen eines umlaufenden Förderers unter Einsatz von durch Druckluftimpulse auf die Artikel einwirkenden Steuermitteln mit einem in Bezug zum Förderer (2) umlaufenden Düsenkörper (19), der in einem Abgabebereich (A) mit Blasluftöffnungen (15, 16) des Förderers kommunizierende radiale Blasdüsen (24 bzw. 25) aufweist, **dadurch gekennzeichnet, daß** die radialen Beasdüsen über einen in Umfangsrichtung des Düsenkörpers verlaufenden Steuerschlitz (28 bzw. 29) zeitlich aufeinanderfolgend mit einem stationären Blasluftanschluß (31 bzw. 32) sowie Entlüftungsanschluß (33 bzw. 34) verbindbar sind und daß die Steuermittel einen synchron zum Förderer (2) umlaufenden Düsenkörper (19) aufweisen.

2. Vorrichtung nach Anspruch 1, **dadurch gekennzeichnet, daß** Blasdüsen (24, 25) und Steuerschlitz (28, 29) durch einen Blasluftkanal (26 bzw. 27) miteinander verbunden sind.

3. Vorrichtung nach Anspruch 1 oder 2, **dadurch gekennzeichnet, daß** der Düsenkörper (19) als in einem stationären, die Blasluft- und Entlüftungsanschlüsse (31, 32 bzw. 33, 34) aufweisenden Steuerflansch (17) gelagerte Welle ausgebildet ist.

4. Vorrichtung nach einem der Ansprüche 1 bis 3, **dadurch gekennzeichnet, daß** jeweils Blasluft- und Entlüftungsanschlüsse (31, 32 bzw. 33, 34) bzw. Steuerschlitze (28 bzw. 29), Blasluftkanäle (26 bzw. 27) und Blasdüsen (24 bzw. 25) für vordere und hintere Blasluftöffnungen (15 bzw. 16) des Förderers (2) vorgesehen sind.

5. Vorrichtung nach einem der Ansprüche 1 bis 4, **dadurch gekennzeichnet, daß** den Steuerschlitzen (28, 29) jeweils zwei im Wechsel separat steuerbare stationäre Blasluftanschlüsse (31 bzw. 32) bzw. Entlüftungsanschlüsse (33 bzw. 34) zugeordnet sind.

6. Vorrichtung nach einem der Ansprüche 1 bis 5, **dadurch gekennzeichnet, daß** der Düsenkörper (19) durch eine vom Förderer (2) abgeleitete Antriebsverbindung antreibbar ist.

7. Vorrichtung nach Anspruch 6, **dadurch gekennzeichnet, daß** die Antriebsverbindung einen von einer Antriebswelle (21) des als Muldentrommel ausgebildeten Förderers (2) antreibbaren Zahnriemen (22) aufweist.

8. Vorrichtung nach einem der Ansprüche 1 bis 7, **dadurch gekennzeichnet, daß** die Blasluftöffnungen (15, 16) zwischen linear beabstandeten Muldenabschnitten (9, 11, 12) der Aufnahmemulden (1) angeordnet sind.

## Claims

1. A device for removing rod-shaped articles of the tobacco-processing industry from receiving means of a revolving conveyor using control means acting on the articles with compressed-air pulses, having a nozzle body (19) which revolves in relation to the conveyor (2) and has radial blast nozzles (24 and 25) communicating with blast-air openings (15, 16) of the conveyor in a delivery region (A), **characterised in that** the radial blast nozzles may be connected in time succession to a stationary blast-air connection (31 and 32) and a ventilation connection (33 and 34) by way of a control slot (28 and 29) extending in the peripheral direction of the nozzle body, and **in that** the control means have a nozzle body (19) revolving synchronously with the conveyor (2).

2. A device according to Claim 1, **characterised in that** the blast nozzles (24, 25) and control slot (28, 29) are mutually connected by a blast-air channel (26 and 27).

3. A device according to Claim 1 or 2, **characterised in that** the nozzle body (19) is constructed as a shaft which is mounted in a stationary control flange (17) having the blast-air and ventilation connections (31, 32 and 33, 34 respectively).

4. A device according to one of Claims 1 to 3, **characterised in that** blast-air and ventilation connections (31, 32 and 33, 34 respectively) and control slots (28 and 29), blast-air channels (26 and 27) and blast nozzles (24 and 25) are provided in each case for the front and rear blast-air openings (15 and 16) of the conveyor (2).

5. A device according to one of Claims 1 to 4, **characterised in that** two stationary blast-air connections (31 and 32) and ventilation connections (33 and 34), which may be controlled separately in alternating manner, are associated in each case with the control slots (28, 29).

6. A device according to one of Claims 1 to 5, **characterised in that** the nozzle body (19) may be driven by a drive connection diverted from the conveyor (2).

7. A device according to Claim 6, **characterised in that** the drive connection has a toothed belt (22) which may be driven by a drive shaft (21) of the conveyor (2) constructed as a trough drum.

8. A device according to one of Claims 1 to 7, **characterised in that** the blast-air openings (15, 16) are arranged between linearly spaced trough portions (9, 11, 12) of the receiving troughs (1).

## Revendications

1. Dispositif pour extraire de logements d'un transporteur rotatif, des articles en forme de tige de l'industrie de transformation du tabac, moyennant la mise en oeuvre de moyens de distribution intervenant sur les articles par des impulsions d'air comprimé, comportant un corps support de buses (19) tournant par rapport au transporteur (2) et qui comporte des buses soufflantes radiales (24 ou 25) communiquant, dans une région de délivrance (A), avec des orifices d'air de soufflage (15, 16) du transporteur, **caractérisé en ce que** les buses soufflantes radiales peuvent être reliées, successivement dans le temps, à un raccord d'air de soufflage fixe (31 ou 32) ainsi qu'à un raccord d'échappement d'air (33 ou 34) par l'intermédiaire d'une fente de distribution (28 ou 29) s'étendant dans la direction circonférentielle du corps support de buses et **en ce que** les moyens de distribution comprennent un corps support de buses (19) tournant de façon synchrone par rapport au transporteur (2).

2. Dispositif selon la revendication 1, **caractérisé en ce que** les buses soufflantes (24, 25) et la fente de distribution (28, 29) sont reliées entre elles par un canal de circulation d'air de soufflage (26 ou 27).

3. Dispositif selon la revendication 1 ou 2, **caractérisé en ce que** le corps support de buses (19) est conçu sous forme d'un arbre monté dans un flasque de distribution fixe (17) qui comporte les raccords d'air de soufflage et d'échappement d'air (31, 32 ou 33, 34).

4. Dispositif selon l'une des revendications 1 à 3, **caractérisé en ce que** des raccords d'air de soufflage et d'échappement d'air (31, 32 et 33, 34) et des fentes de distribution (28 et 29), des canaux de circulation d'air de soufflage (26 et 27) et des buses soufflantes (24 et 25) sont respectivement prévus pour des orifices d'air de soufflage avant et des orifices d'air de soufflage arrière (15 et 16) du transporteur (2).

5. Dispositif selon l'une des revendications 1 à 4, **caractérisé en ce qu'**à chacune des fentes de distribution (28, 29) sont associés deux raccords fixes d'air de soufflage (31 et 32) et deux raccords fixes d'échappement d'air (33 et 34), qui peuvent être commandés séparément en alternance.

6. Dispositif selon l'une des revendications 1 à 5, **caractérisé en ce que** le corps support de buses (19) peut être entraîné par une liaison motrice placée en dérivation sur le transporteur (2).

7. Dispositif selon la revendication 6, **caractérisé en ce que** la liaison motrice comporte une courroie crantée (22) susceptible d'être entraînée par un arbre d'entraînement (21) du transporteur (2) conçu sous forme d'un tambour à cavités.

8. Dispositif selon l'une des revendications 1 à 7, **caractérisé en ce que** les orifices d'air de soufflage (15, 16) sont disposés entre des tronçons de cavité (9, 11, 12), distants linéairement l'un de l'autre, des cavités de logement (1).
